# EUROPEAN PATENT SPECIFICATION

(11) **EP 4 272 477 B1**
(45) Date of publication and mention of the grant of the patent: **31.12.2025**
(21) Application number: 21835151.8
(22) Date of filing: 26.11.2021
(51) Int. Cl.: H04W 12/72, H04W 12/086

(54) **REPORT OF SESSION S-NSSAI TO DN-AAA SERVER**
MELDUNG DER S-NSSAI-SITZUNG AN EINEN DN-AAA-SERVER
RAPPORT DE LA SESSION S-NSSAI À UN SERVEUR DN-AAA

(30) Priority: 31.12.2020 WO PCT/CN2020/142242
(43) Date of publication of application: 08.11.2023
(73) Proprietor: Telefonaktiebolaget LM Ericsson (publ), 164 83 Stockholm (SE)
(72) Inventor: LIANG, Tianmei, Shanghai 200335 (CN); HE, Yingjiao, Shanghai 200335 (CN); ZHANG, Wen, Shanghai 200335 (CN)
(74) Representative: Ericsson
(86) International application number: PCT/CN2021/133531
(87) International publication number: WO 2022/142921

(56) References cited:
- US-A1- 2020 053 083
- "3rd Generation Partnership Project; Technical Specification Group Core Network and Terminals; 5G System; Interworking between 5G Network and external Data Networks; Stage 3 (Release 16)", 16 December 2019 (2019-12-16), XP051839272, Retrieved from the Internet <URL:https://ftp.3gpp.org/tsg_ct/WG3_interworking_ex-CN3/DRAFT_SPEC_IMPLEMENTATIONS/CT_86/Draft/draft_29561-g20.doc> [retrieved on 20191216]
- "5G; System architecture for the 5G System (5GS) (3GPP TS 23.501 version 16.6.0 Release 16)", vol. 3GPP SA, no. V16.6.0, 27 October 2020 (2020-10-27), pages 1 - 450, XP014389453, Retrieved from the Internet <URL:http://www.etsi.org/deliver/etsi_ts/123500_123599/123501/16.06.00_60/ts_123501v160600p.pdf> [retrieved on 20201027]

## Description

### Technical Field

The embodiments herein relate generally to the field of communication, and more particularly, the embodiments herein relate to report of the Single Network Slice Selection Assistance Information (S-NSSAI) that is associated with the Protocol Data Unit (PDU) Session to Data Network Authentication Authorization Accounting (DN-AAA) server.

### Background

Although Network Slice Specific Authentication and Authorization (NSS-AAA) server may get S-NSSAI information upon the network slice access authentication request, while this solution needs all of User Equipment (UE), Authentication Management Function (AMF), Network Slice Specific Authentication and Authorization Function (NSSAAF) and NSS-AAA server supporting Network Slice Specific Authentication and Authorization (NSSAA) feature, also needs the optional UE subscription data with S-NSSAI(s) subject to Network Slice-Specific Authentication defined in 3GPP stage 2 specifications. Meanwhile since the NSSAA feature is not applicable to the PDU Session and Accounting function in stage 2, hence stage 3 TS 29.561 defines PDU Session and Accounting Request/Response messages are not applicable to interworking with NSS-AAA Server, that is the NSSAA feature solution cannot separate N6 network based on S-NSSAI while informing to the Remote Authentication Dial In User Service (RADIUS) Server which slice is assigned for each of session.

3GPP TS 29.561 V17.0.0 defines the stage 3 interworking procedures for 5G Network interworking between PLMN and external DN or Network Slice Specific AAA.

3GPP TS 23.501 V16.7.0 defines the Stage 2 system architecture for the 5G System.

US 2020/0053083 A1 describes a technique for network slice authentication. One apparatus includes a processor that provides an application layer and a non-access stratum ("NAS") layer and a transceiver for communicating with a mobile communication network. The processor receives, at an application at the application layer, network slice authentication information for a subscribed service and stores the network slice authentication information at an application module. The processor associates the network slice authentication information with single network slice selection assistance information ("S-NSSAI") and registers the application with the NAS layer, said registration pointing to the associated S-NSSAI. Additionally, the transceiver exchanges, via the NAS layer, authentication messages with an authentication, authorization, and accounting ("AAA") server for network slice authentication information.

### Summary

In view of above deficiency in the prior art, the embodiments herein propose a solution for Session Management Function (SMF) to report the S-NSSAI that is associated with the PDU Session on the Radius or Diameter Authentication and Accounting requests to DN-AAA server. In particular, the present disclosure provides methods, network functions and a computer readable medium as defined in the independent claims. Embodiments not falling within the terms of the claims are to be understood as background art or examples useful for understanding the claimed subject-matter.

In an embodiment, there proposes a first method performed by a first network function implementing DN-AAA server. In an embodiment, the method may comprise the step of receiving, from a second network function, a request message comprising network slice related information for a PDU Session. In addition, the request message may be an access request message for authentication at least based on the network slice related information, or an accounting request message indicating that the PDU session has started.

In another embodiment, there proposes a first network function implementing DN-AAA server, which may comprise: at least one processor; and a non-transitory computer readable medium coupled to the at least one processor. In an embodiment, the non-transitory computer readable medium may contain instructions executable by the at least one processor, whereby the at least one processor is configured to perform the first method.

In yet another embodiment, there proposes a second method performed by a second network function implementing SMF or combined SMF + PGW-C. In an embodiment, the method may comprise the step of transmitting, to a first network function implementing DN-AAA server, a request message comprising network slice related information for a PDU Session. In addition, the request message may be an access request message for authentication at least based on the network slice related information, or an accounting request message indicating that the PDU session has started.

In yet another embodiment, there proposes a second network function implementing SMF or combined SMF + PGW-C, which may comprises: at least one processor; and a non-transitory computer readable medium coupled to the at least one processor. In an embodiment, the non-transitory computer readable medium may contain instructions executable by the at least one processor, whereby the at least one processor is configured to perform the second method.

In yet another embodiment, there proposes a computer readable medium, which may comprise computer readable code, which when run on an apparatus, causes the apparatus to perform any of the above method.

In yet another embodiment, there proposes a computer program product, which may comprise computer readable code, which when run on an apparatus, causes the apparatus to perform any of the above method.

With embodiments herein, DN-AAA server can know the network slice information that is associated with the session for authentication and statistics based on the received Session S-NSSAI information.

### Brief Description of the Drawings

The accompanying drawings, which are incorporated herein and form part of the specification, illustrate various embodiments of the present disclosure and, together with the description, further serve to explain the principles of the disclosure and to enable a person skilled in the pertinent art to make and use the embodiments disclosed herein. In the drawings, like reference numbers indicate identical or functionally similar elements, and in which:
Figure 1 is a schematic block diagram showing an example communication system, in which the embodiments herein may be implemented;
Figure 2 is a schematic signaling chart showing the messages in report of the Session S-NSSAI;
Figure 3 is a schematic flow chart showing an example method in the first network function (such as DN-AAA server), according to the embodiments herein;
Figure 4 is a schematic flow chart showing an example method in the second network function (such as SMF or combined SMF + PGW-C), according to the embodiments herein;
Figure 5 is a schematic block diagram showing an example network function, which may be configured as the first network function or the second network function, according to the embodiments herein;
Figure 6 is a schematic block diagram showing an example computer-implemented apparatus, according to the embodiments herein.

### Detailed Description of Embodiments

Embodiments herein will be described in detail hereinafter with reference to the accompanying drawings, in which embodiments are shown. These embodiments herein may, however, be embodied in many different forms and should not be construed as being limited to the embodiments set forth herein. The elements of the drawings are not necessarily to scale relative to each other.

Reference to "one embodiment" or "an embodiment" means that a particular feature, structure or characteristic described in connection with the embodiment is included in at least one embodiment. Thus, the appearances of the phrase "in an embodiment" appearing in various places throughout the specification are not necessarily all referring to the same embodiment.

The term "A, B, or C" used herein means "A" or "B" or "C"; the term "A, B, and C" used herein means "A" and "B" and "C"; the term "A, B, and/or C" used herein means "A", "B", "C", "A and B", "A and C", "B and C" or "A, B, and C".

The prior art solution in which the NSS-AAF report the S-NSSAI to the NSS-AAA cannot meet the requirement for separating N6 network based on S-NSSAI while informing to the Radius Server which slice is assigned for each of session.

Meanwhile, the 3GPP TS29.561 doesn't define "slice" attribute present in the Radius Authentication, Accounting (START, Interim, STOP) messages interworking with DN-AAA server. Therefore, the DN-AAA server including both authentication, authorization and accounting doesn't know the network slice information that is associated with the PDU Session for authentication and accounting statistics.

In view of above problem and deficiency in the prior art, the embodiments herein propose that the SMF send the S-NSSAI that is associated with the PDU Session to the DN-AAA server.

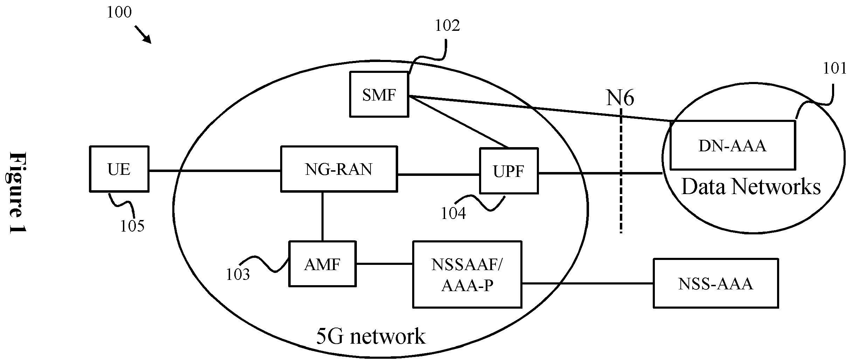

Figure 1 is a schematic block diagram showing an example communication system 100, in which the embodiments herein may be implemented.

In an embodiment, as shown in Figure 1, the application scenarios of the embodiments herein may occur in 5G system. The communication system 100 may include but not limit to a first network function 101 and a second network function 102. In an embodiment, the first network function 101 may be configured as DN-AAA server. In an embodiment, the second network function 102 may be configured as SMF.

Note that, if the DN-AAA server 101 located in 5G Core (5GC) or in the external Packet Data Network (PDN) is reachable directly, then the SMF 102 may communicate with the DN-AAA server 101 directly without involving the User Plane Function (UPF) 104, applicable to all the message flows on N6 interface in the below embodiments.

It should be understood that, a network function may be implemented either as a network element on a dedicated hardware, as a software instance running on a dedicated hardware, or as a virtualized function instantiated on an appropriate platform, e.g. on a cloud infrastructure.

It should be understood that, the application scenarios of the embodiments herein may also occur in other current telecommunication systems, e.g., 4G system or EPC or future telecommunication systems, where the network functions may have the same or similar functionalities as the above network functions in 5GS. For example, in the 4G system, the second network function 102 may also be configured as combined SMF + PGW-C.

For simplicity purpose, the embodiments herein are based on 5G architecture. The embodiments herein are applicable to 4G (EPC) architecture as well.

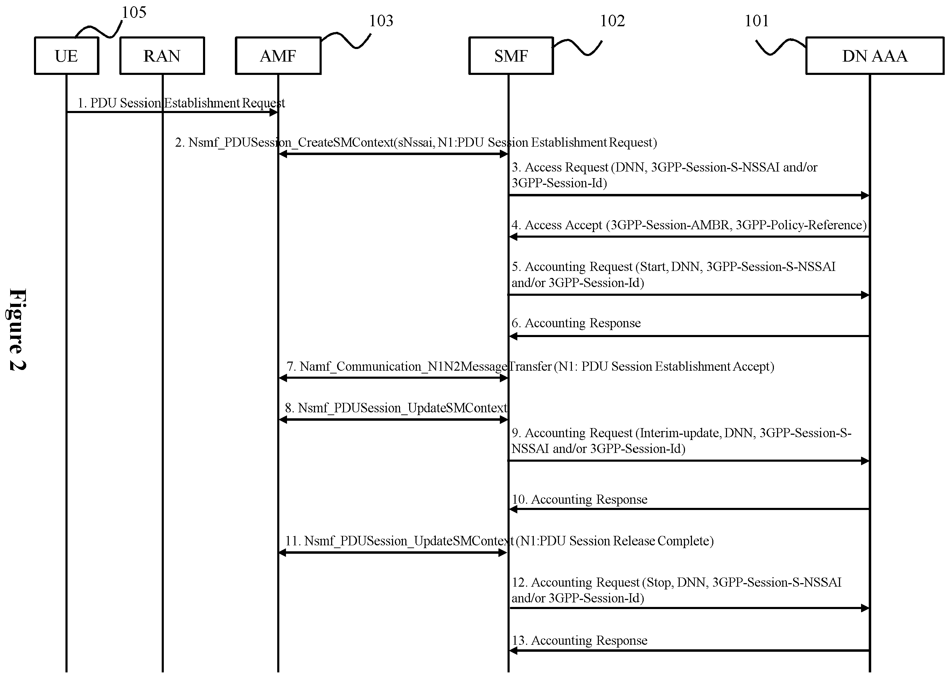

Figure 2 is a schematic signaling chart showing the messages in report of the Session S-NSSAI.

In an embodiment, when the SMF 102 gets the S-NSSAI from AMF 103, the SMF 102 may report this S-NSSAI to DN-AAA server 101 (i.e., authentication, authorization and accounting server). In an embodiment, as shown in Figure 2, the report procedure may involve the following steps.

Step 1: The UE 105 may initiate the PDU Session Establishment procedure, by including authentication/authorization information.

Step 2: The AMF 103 may send Nsmf_PDUSession_CreateSMContext Request message including the authentication/authorization information to the SMF 102 and the SMF 102 may respond to the service operation.

In an embodiment, the AMF 103 may send the Nsmf_PDUSession_CreateSMContext Request message with S-NSSAI.

Step 3: The SMF 102 may send the Access-Request message to the DN-AAA server 101. For example, the message may be forwarded from the SMF 102 to the DN-AAA server 101 by the UPF 104 in N4 user plane message. Note that, the SMF 102 may directly send the Access-Request message to the DN-AAA server 101 without the UPF 104. Note that, the Date Network Name (DNN) information may also be included in the Access-Request message.

In an embodiment, the SMF 102 may send 3GPP-Session-S-NSSAI and/or a separate PDU session ID (for example 3GPP-Session-Id) to the DN-AAA server 101 in Access Request message. For example, the SMF 102 may send the S-NSSAI that is associated with the PDU Session in the 3GPP-Session-S-NSSAI Vendor-Specific-Attribute (VSA) to the DN-AAA server 101.

In an embodiment, the access request message is a Radius access request message. In an embodiment, the S-NSSAI may be indicated by 3GPP Session S-NSSAI.

For example, examples of the VSA "3GPP-Session-S-NSSAI" and/or "3GPP-Session-Id" within the Radius access request message are shown in the table 1.

**Table 1: a part of information needed for 5G for RADIUS VSAs**

| | | |
|---|---|---|
| 125 | 3GPP-Session-S-NSSAI | Added |
| 128 | 3GPP-Session-Id | Added |

For example, examples of the sub-attributes of the VSA "3GPP-Session-S-NSSAI" and/or "3GPP-Session-Id" within the Radius access request message is shown in the table 2.

**Table 2: List of the 3GPP Vendor-Specific sub-attributes for N6 interface**

| Sub-attr # | Sub-attribute Name | Description | Presence Requirement | Associated attribute (Location of Sub-attr) | Applicability |
|---|---|---|---|---|---|
| 125 | 3GPP-Session-S-NSSAI | Indicates the S-NSSAI that is associated with the PDU Session. | Optional | Access-Request | |
| | | | | Accounting-Request START, Accounting-Request STOP, Accounting-Request Interim-Update(optional) | |
| 128 | 3GPP-Session-Id | Indicates the PDU session Id that is associated with the PDU Session. | Optional | Access-Request | |
| | | | | Accounting-Request START, Accounting-Request STOP, Accounting-Request Interim-Update(optional) | |

For example, example of Attribute-Value Pairs (AVP) of the VSA "3GPP-Session-S-NSSAI" and/or "3GPP-Session-Id" within the Radius access request message, which are reused from N6 interface, are shown in the table 3.

**Table 3. N6 re-used AVPs**

| Attribute Name | AVP Code | Section defined | Value Type (NOTE 2) | AVP Flag rules (NOTE 1) | | | | May Encr. | Applicability |
|---|---|---|---|---|---|---|---|---|---|
| | | | | Must | May | Should not | Must not | | |
| 3GPP-Session-S-NSSAI | 125 | 11.3.1 | OctetString | V | P | | M | Y | |
| 3GPP-Session-Id | 128 | 11.3.1 | OctetString | V | P | | M | Y | |

For example, example contents of the VSA "3GPP-Session-S-NSSAI" and/or "3GPP-Session-Id" within the Radius access request message are shown in the table 4-1 and table 4-2.

**Table 4-1. examples of 3GPP-Session-S-NSSAI**

| 125 - 3GPP-Session-S-NSSAI | | | | | | | | |
|---|---|---|---|---|---|---|---|---|
| | Bits | | | | | | | |
| **Octets** | **8** | **7** | **6** | **5** | **4** | **3** | **2** | **1** |
| 1 | 3GPP type = 125 | | | | | | | |
| 2 | 3GPP Length= m | | | | | | | |
| 3 | PduSessionId | | | | | | | |
| 4 | SST | | | | | | | |
| 5-7 | SD (octet string) | | | | | | | |
| 3GPP Type: 125 | | | | | | | | |

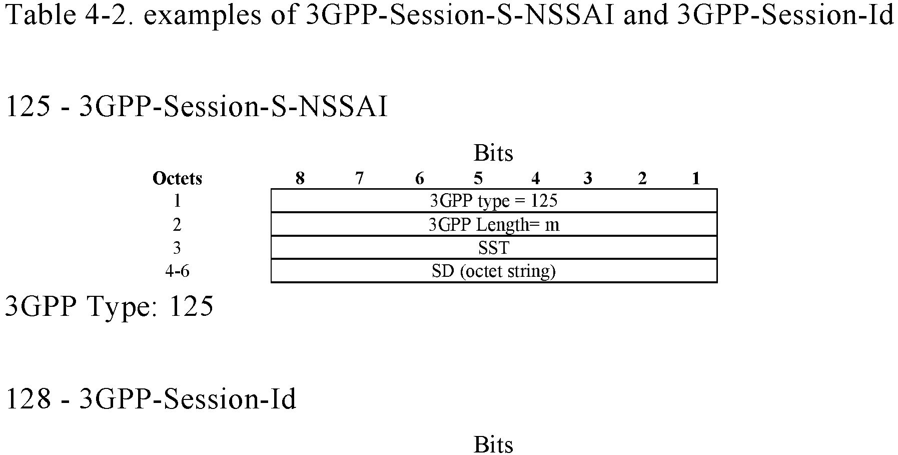

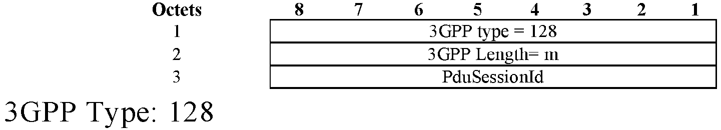

### Length: 4 or 7

PduSessionId: 1-octet integer, Unsigned integer identifying a PDU session, within the range 0 to 255, as specified in subclause 5.4.2 of 3GPP TS 29.571 [46].

SST: the Slice/Service Type with value range 0 to 255.

SD: 3-octet string, representing the Slice Differentiator, the encoding follows SD attribute specified in subclause 5.4.4.2 of 3GPP TS 29.571 [46]. Its presence depends on the Length field.

It may be sent from the SMF 102 to the DN-AAA server 101 to indicate the S-NSSAI that is associated with the PDU Session.

As shown in the above table 4-1, in an embodiment, the Session S-NSSAI (such as 3GPP-Session-S-NSSAI) may further include information indicating at least one of PDU session ID, the Slice/Service Type (SST) and the Slice Differentiator of the network slice. In one embodiment, the PDU Session ID and SST shall be presented in the defined 3GPP-Session-S-NSSAI, and the Slice Differentiator is optional.

As shown in the above table 4-2, in an embodiment, the PDU Session ID may be sent via a separate 3GPP-Session-Id.

Note that, in another embodiment, the S-NSSAI may be indicated by other VSA containing S-NSSAI.

In an embodiment, the S-NSSAI may be indicated by other VSA containing S-NSSAI. For example, the VSA "200 - 3GPP-S-NSSAI" may be reused for indicating S-NSSAI.

For example, example contents of the VSA "3GPP-S-NSSAI" within the Radius access request message are shown in the table 5.

**Table 5. 200 - 3GPP-S-NSSAI**

| | Bits | | | | | | | |
|---|---|---|---|---|---|---|---|---|
| **Octets** | **8** | **7** | **6** | **5** | **4** | **3** | **2** | **1** |
| 1 | 3GPP type = 200 | | | | | | | |
| 2 | 3GPP Length= m | | | | | | | |
| 3 | SST | | | | | | | |
| 4-6 | SD (octet string) | | | | | | | |

3GPP Type: 200
Length: 3 or 6
SST: the Slice/Service Type with value range 0 to 255.
SD: 3-octet string, representing the Slice Differentiator, the encoding follows sd attribute specified in subclause 5.4.4.2 of 3GPP TS 29.571 [46]. Its presence depends on the Length field.

In an embodiment, for diameter protocol, the access request message in step 3 may be adapted as a Diameter Authentication Authorization Request (AAR) message, or a Diameter Extensible Authentication Protocol Request (DER) message. As may be understood, the example in the above tables 1-5 for radius protocol may also be used for diameter protocol.

Step 4. The DN-AAA server 101 may respond with Access Accept message with policy parameters for this S-NSSAI and DNN. For diameter protocol, the step 4 may also be adapted accordingly as Diameter Authentication Authorization Answer (AA-A) message, or a Diameter Extensible Authentication Protocol Answer (DEA) message.

Step 5: the SMF 102 may request to start accounting by sending the Accounting-Request (Start) message with 3GPP-Session-S-NSSAI and/or 3GPP-Session-Id to the DN-AAA accounting server, i.e., accounting function within the DN-AAA server 101. The DN-AAA accounting server may use the 3GPP-Session-S-NSSAI and/or 3GPP-Session-Id for statistics for the user PDU Session associated S-NSSAI. Note that, the DN-AAA accounting server may use the 3GPP-Session-S-NSSAI and/or 3GPP-Session-Id for other functions in addition to statistics. As may be understood, the example in the above tables 1-5 for access request message in step 3 may also be used for Accounting-Request (Start) message in step 5. Note that, the DNN information may also be included in the Accounting-Request (Start) message.

Step 6: The DN-AAA 101 may respond with the Accounting-Response (Start) message. The SMF 102 may wait for the Accounting-Response (Start) before sending the Namf_Communication_N1N2MessageTransfer request in step 7.

Step 7. The SMF 102 may proceed with the PDU session establishment procedure and may send PDU Session Establishment Accept in Namf_Communication_N1N2MessageTransfer service to setup the PDU Session.

Step 8. The AMF 103 may send Nsmf_PDUSession_UpdateSMContext message during some procedures such as N2 handover.

Steps 9-10. The SMF 102 may send Accounting Request (interim-update) message with optional 3GPP-Session-S-NSSAI and/or 3GPP-Session-Id to the accounting server. As may be understood, the example in the above tables 1-5 for access request message in step 3 may also be used for Accounting-Request (interim-update) message in step 9. Note that, the DNN information may also be included in the Accounting-Request (interim-update) message.

Step 11. The AMF 103 may send Nsmf_PDUSessionUpdateSMContext message when the PDU Session is released.

Steps 12-13. The SMF 102 may send Accounting Request (Stop) message with 3GPP-Session-S-NSSAI and/or 3GPP-Session-Id to the accounting server. As may be understood, the example in the above tables 1-5 for access request message in step 3 may also be used for Accounting-Request (Stop) message in step 12. Note that, the DNN information may also be included in the Accounting-Request (Stop) message.

As a result of the above report procedure, the DN-AAA server 101 can get S-NSSAI information for users and do correct network slice related statistics for further actions. Besides, the DN-AAA server 101 can authenticate with the UE PDU Session associated S-NSSAI received from the Access-Request (Start) message effectively.

Note that, the same procedure is also applicable for the combined SMF+PGW-C with 4G access and supporting EPS interworking, the SMF 102 may get the S-NSSAI information from for example the UDM server and used for this PDN connection.

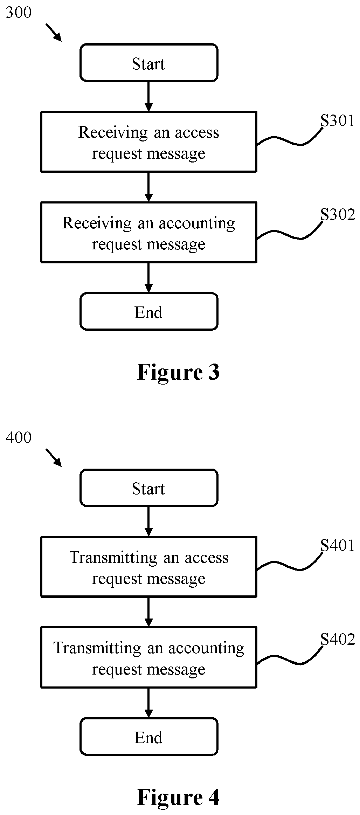

Figure 3 is a schematic flow chart showing an example method 300 in the first network function 101 (such as DN-AAA server), according to the embodiments herein.

The method 300 may begin with step S301, in which the first network function 101 may receive, from a second network function 102 (such as SMF or combined SMF + PGW-C), a request message comprising network slice related information for a PDU Session.

In an embodiment, the network slice related information may indicate the S-NSSAI that is associated with the PDU Session. For example, the S-NSSAI may be indicated by 3GPP Session S-NSSAI and/or 3GPP-Session-Id as shown in tables 1-4 or other VSA containing S-NSSAI as shown in table 5.

In an embodiment, as shown in the table 4-1, the Session S-NSSAI (such as 3GPP-Session-S-NSSAI) may include information indicating at least one of PDU session ID, the Slice/Service Type (SST) and the Slice Differentiator (optional) of the network slice. As shown in the above table 4-2, in an embodiment, the PDU Session ID may be sent via a separate 3GPP-Session-Id.

In an embodiment, as shown in the step 3 of Figure 2, the request message may be an access request message for authentication at least based on the network slice related information. In an embodiment, the request message may further comprise DNN information.

In an embodiment, as described in combined with the step 3 of Figure 2, the access request message may be a Radius access request message, a Diameter AA-R message, or a DER message.

Then, the method 300 may proceed to step S302, in which the first network function 101 may receive, from a second network function 102, a request message comprising network slice related information for a PDU Session.

In an embodiment, the network slice related information may indicate the S-NSSAI that is associated with the PDU Session. For example, the S-NSSAI may be indicated by 3GPP Session S-NSSAI and/or 3GPP-Session-Id as shown in tables 1-4 or other VSA containing S-NSSAI as shown in table 5.

In an embodiment, as shown in the table 4-1, the Session S-NSSAI (such as 3GPP-Session-S-NSSAI) may include information indicating at least one of PDU session ID, the Slice/Service Type (SST) and the Slice Differentiator (optional) of the network slice. As shown in the above table 4-2, in an embodiment, the PDU Session ID may be sent separately via a separate 3GPP-Session-Id.

In an embodiment, as shown in the steps 5, 9, 12 of Figure 2, the request message may be an accounting request message indicating that the PDU session has started. In an embodiment, the request message may further comprise DNN information.

In an embodiment, as shown in the above table 4, the network slice related information may further indicate the PDU session ID. For example, the PDU session ID may be indicated by 3GPP Session ID or other VSA containing the PDU session ID.

In an embodiment, as described in combined with the steps 5, 9, 12 of Figure 2, the accounting request message may be a Radius accounting request message or a Diameter accounting request message.

In an embodiment, as described in combined with the steps 5 of Figure 2, the accounting request message may further comprise information indicating the start for the accounting session.

In an embodiment, as described in combined with the steps 5 of Figure 2, the accounting request message may further comprise information indicating the interim-update for the accounting session.

In an embodiment, as described in combined with the steps 5 of Figure 2, the accounting request message may further comprise information indicating the stop for the accounting session.

The above steps are only examples, and the first network function 101 may perform any actions described in connection to Figure 2, to get S-NSSAI information for users and do correct network slice related statistics for further actions.

Figure 4 is a schematic flow chart showing an example method in the second network function 102 (such as SMF or combined SMF + PGW-C), according to the embodiments herein;
The method 400 may begin with step S401, in which the second network function 102 may transmit, to a first network function 101 (such as DN-AAA server), a request message comprising network slice related information for a PDU Session.

In an embodiment, the network slice related information may indicate the S-NSSAI that is associated with the PDU Session. For example, the S-NSSAI may be indicated by 3GPP Session S-NSSAI and/or 3GPP-Session-Id as shown in tables 1-4 or other VSA containing S-NSSAI as shown in table 5.

In an embodiment, as shown in the table 4-1, the Session S-NSSAI (such as 3GPP-Session-S-NSSAI) may include information indicating at least one of PDU session ID, the Slice/Service Type (SST) and the Slice Differentiator (optional) of the network slice. As shown in the above table 4-2, in an embodiment, the PDU Session ID may be sent separately via a separate 3GPP-Session-Id.

In an embodiment, as shown in the step 3 of Figure 2, the request message may be an access request message for authentication at least based on the network slice related information. In an embodiment, the request message may further comprise DNN information.

In an embodiment, as shown in the above table 4, the network slice related information may further indicate the PDU session ID. For example, the PDU session ID may be indicated by 3GPP Session ID or other VSA containing the PDU session ID.

In an embodiment, as described in combined with the step 3 of Figure 2, the access request message may be a Radius access request message, a Diameter AA-R message, or a DER message.

Then, the method 400 may proceed to step S402, in which the second network function 102 may transmit, to a first network function 101, a request message comprising network slice related information for a PDU Session.

In an embodiment, the network slice related information may indicate the S-NSSAI that is associated with the PDU Session. For example, the S-NSSAI may be indicated by 3GPP Session S-NSSAI and/or 3GPP-Session-Id as shown in tables 1-4 or other VSA containing S-NSSAI as shown in table 5.

In an embodiment, as shown in the table 4-1, the Session S-NSSAI (such as 3GPP-Session-S-NSSAI) may include information indicating at least one of PDU session ID, the Slice/Service Type (SST) and the Slice Differentiator (optional) of the network slice. As shown in the above table 4-2, in an embodiment, the PDU Session ID may be sent separately via a separate 3GPP-Session-Id.

In an embodiment, as shown in the steps 5, 9, 12 of Figure 2, the request message may be an accounting request message indicating that the PDU session has started. In an embodiment, the request message may further comprise DNN information.

In an embodiment, as described in combined with the steps 5, 9, 12 of Figure 2, the accounting request message may be a Radius accounting request message or a Diameter accounting request message.

In an embodiment, as described in combined with the steps 5 of Figure 2, the accounting request message may further comprise information indicating the start for the accounting session.

In an embodiment, as described in combined with the steps 5 of Figure 2, the accounting request message may further comprise information indicating the interim-update for the accounting session.

In an embodiment, as described in combined with the steps 5 of Figure 2, the accounting request message may further comprise information indicating the stop for the accounting session.

The above steps are only examples, and the second network function 102 may perform any actions described in connection to Figure 2, to report S-NSSAI information for users, in order to do correct network slice related statistics for further actions.

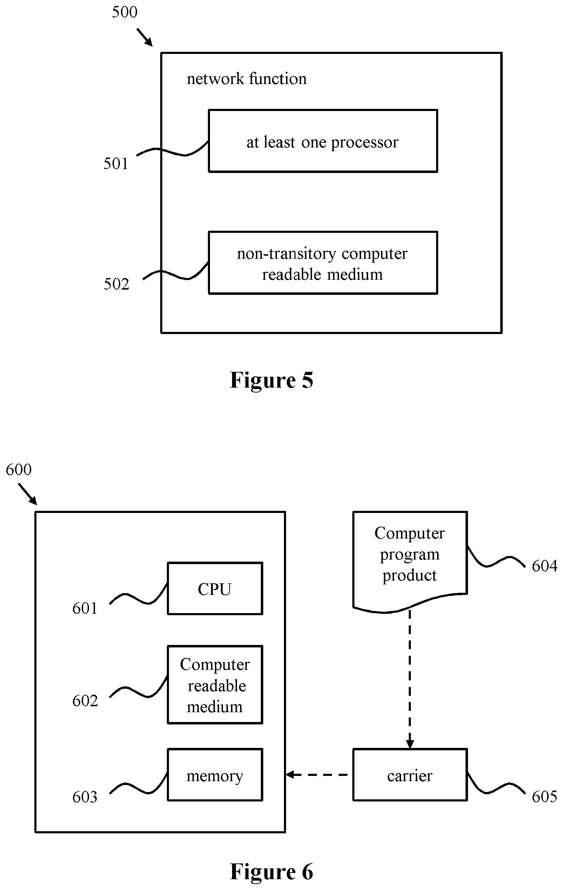

Figure 5 is a schematic block diagram showing an example network function 500, which may be configured as the first network function 101 or the second network function 102, according to the embodiments herein.

In an embodiment, the network function 500 may include at least one processor 501; and a non-transitory computer readable medium 502 coupled to the at least one processor 501. The non-transitory computer readable medium 502 contains instructions executable by the at least one processor 501, whereby the at least one processor 501 is configured to perform the steps in the example method 300 as shown in the schematic flow chart of Figure 3 (when configured as the first network function 101) or the example method 400 as shown in the schematic flow chart of Figure 4 (when configured as the second network function 102); the details thereof are omitted here.

Note that, the network function 500 may be implemented as hardware, software, firmware and any combination thereof. For example, the network function 500 may include a plurality of units, circuities, modules or the like, each of which may be used to perform one or more steps of the example methods 300 or 400, or one or more steps shown in Figure 2 related to the first network function 101 or the second network function 102.

Figure 6 is a schematic block diagram showing an example computer-implemented apparatus 600, according to the embodiments herein. In an embodiment, the apparatus 600 may be configured as the above mentioned apparatus, such as the first network function 101 or the second network function 102.

In an embodiment, the apparatus 600 may include but not limited to at least one processor such as Central Processing Unit (CPU) 601, a computer-readable medium 602, and a memory 603. The memory 603 may comprise a volatile (e.g. Random Access Memory, RAM) and/or non-volatile memory (e.g. a hard disk or flash memory). In an embodiment, the computer-readable medium 602 may be configured to store a computer program and/or instructions, which, when executed by the processor 601, causes the processor 601 to carry out any of the above mentioned methods.

In an embodiment, the computer-readable medium 602 (such as non-transitory computer readable medium) may be stored in the memory 603. In another embodiment, the computer program may be stored in a remote location for example computer program product 604 (also may be embodied as computer-readable medium), and accessible by the processor 601 via for example carrier 605.

The computer-readable medium 602 and/or the computer program product 604 may be distributed and/or stored on a removable computer-readable medium, e.g. diskette, CD (Compact Disk), DVD (Digital Video Disk), flash or similar removable memory media (e.g. compact flash, SD (secure digital), memory stick, mini SD card, MMC multimedia card, smart media), HD-DVD (High Definition DVD), or Blu-ray DVD, USB (Universal Serial Bus) based removable memory media, magnetic tape media, optical storage media, magneto-optical media, bubble memory, or distributed as a propagated signal via a network (e.g. Ethernet, ATM, ISDN, PSTN, X.25, Internet, Local Area Network (LAN), or similar networks capable of transporting data packets to the infrastructure node).

Example embodiments are described herein with reference to block diagrams and/or flowchart illustrations of computer-implemented methods, apparatus (systems and/or devices) and/or non-transitory computer program products. It is understood that a block of the block diagrams and/or flowchart illustrations, and combinations of blocks in the block diagrams and/or flowchart illustrations, may be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that may direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications may be made to the embodiments. Accordingly, the above disclosed subject matter is to be considered illustrative, and not restrictive, and the appended examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure including the following examples of embodiments and their equivalents, and shall not be restricted or limited by the foregoing detailed description.

### Abbreviations

- 3GPP: third Generation Partnership Project
- AAR: Authentication Authorization Request
- AMF: Authentication Management Function
- DER: Diameter Extensible Authentication Protocol Request
- DN-AAA: Data Network Authentication Authorization Accounting
- DNN: Data Network Name
- PDU: Protocol Data Unit
- PGW-C: P-Gateway-C
- Radius: Remote Authentication Dial In User Service
- S-NSSAI: Single Network Slice Selection Assistance Information
- SMF: Session Management Function
- SST: Slice/Service Type
- NSSAAA: Network Slice Specific Authentication and Authorization Accounting;
- NSSAAF: Network Slice Specific Authentication and Authorization Function;
- PDN: Packet Data Network;
- UE: User Equipment;
- UPF: User Plane Function.

## Claims

1. A method (300) for network slice related authentication, authorization and/or accounting, performed by a first network function (101) implementing Data Network Authentication Authorization Accounting (DN-AAA) server and comprising:
- receiving (S301, S302), from a second network function (102), a request message comprising network slice related information for a Protocol Data Unit (PDU) Session and an Identifier (ID) of the PDU Session,
wherein the request message is an access request message for authentication, or
wherein the request message is an accounting request message indicating that the PDU session has started.

2. The method (300) according to claim 1, wherein the network slice related information indicates the Single Network Slice Selection Assistance Information (S-NSSAI) that is associated with the PDU Session; and optionally wherein the S-NSSAI is indicated by 3GPP Session S-NSSAI or other Vendor-Specific-Attribute (VSA) containing S-NSSAI; and optionally wherein the Session S-NSSAI further includes information indicating at least one of following parameters: PDU session ID, the Slice/Service Type (SST) and the Slice Differentiator of the network slice.

3. The method (300) according to any one of claims 1-2, wherein the request message further comprises Data Network Name (DNN) information.

4. The method (300) according to claim 1, wherein the network slice related information further indicates the PDU session ID; and optionally wherein the PDU session ID is indicated by 3GPP Session ID or other Vendor-Specific-Attribute (VSA) containing the PDU session ID.

5. The method (300) according to claim 1, wherein the access request message is a Remote Authentication Dial In User Service (Radius) access request message, a Diameter Authentication Authorization Request (AAR) message, or a Diameter Extensible Authentication Protocol Request (DER) message.

6. The method (300) according to claim 1, wherein the accounting request message is a Remote Authentication Dial In User Service (Radius) accounting request message or a Diameter accounting request message; and optionally wherein the accounting request message further comprises information indicating the start, interim-update or stop for the accounting session.

7. The method (300) according to any one of claims 1-6, wherein the second network function is a network function implementing Session Management Function (SMF) or combined SMF + P-Gateway-C (PGW-C).

8. A method (400) performed by a second network function (102) implementing Session Management Function (SMF) or combined SMF + P-Gateway-C (PGW-C), comprising:
- transmitting (S401, S402), to a first network function (101) implementing Data Network Authentication Authorization Accounting (DN-AAA) server, a request message comprising network slice related information for a Protocol Data Unit (PDU) Session and an Identifier (ID) of the PDU Session,
wherein the request message is an access request message for authentication, or
wherein the request message is an accounting request message indicating that the PDU session has started.

9. The method (400) according to claim 8, wherein the network slice related information indicates the Single Network Slice Selection Assistance Information (S-NSSAI) that is associated with the PDU Session; and optionally wherein the S-NSSAI is indicated by 3GPP Session S-NSSAI or other Vendor-Specific-Attribute (VSA) containing S-NSSAI; and optionally wherein the Session S-NSSAI further includes information indicating at least one of following parameters: PDU session ID, the Slice/Service Type (SST) and the Slice Differentiator of the network slice.

10. The method (400) according to any one of claims 8-9, wherein the request message further comprises Data Network Name (DNN) information.

11. The method (400) according to claim 8, wherein the network slice related information further indicates the PDU session ID; and optionally wherein the PDU session ID is indicated by 3GPP Session ID or other Vendor-Specific-Attribute (VSA) containing the PDU session ID.

12. The method (400) according to claim 8, wherein
{i} the access request message is a Remote Authentication Dial In User Service (Radius) access request message, a Diameter Authentication Authorization Request (AAR) message, or a Diameter Extensible Authentication Protocol Request (DER) message; wherein, optionally, the accounting request message further comprises information indicating the start, interim-update or stop for the accounting Session; or
{ii} the accounting request message is a Remote Authentication Dial In User Service (Radius) accounting request message or a Diameter accounting request message; wherein, optionally, the accounting request message further comprises information indicating the start, interim-update or stop for the accounting Session.

13. A first network function (101, 500) implementing Data Network Authentication Authorization Accounting (DN-AAA) server, comprising:
at least one processor (501); and
a non-transitory computer readable medium (502) coupled to the at least one processor (501), the non-transitory computer readable medium (502) contains instructions executable by the at least one processor (501), whereby the at least one processor (501) is configured to perform the method according to any one of claims 1-7.

14. A second network function (102, 500) implementing Session Management Function (SMF) or combined SMF + P-Gateway-C (PGW-C), comprising:
at least one processor (501); and
a non-transitory computer readable medium (502) coupled to the at least one processor (501), the non-transitory computer readable medium (502) contains instructions executable by the at least one processor (501), whereby the at least one processor (501) is configured to perform the method according to any one of claims 8-12.

15. A computer readable medium (502, 602) comprising computer readable code, which when run on an apparatus (101, 102, 500, 600), causes the apparatus (101, 102, 500, 600) to perform the method according to any one of claims 1-7 or 8-12.

## Patentansprüche

1. Verfahren (300) zur auf Network Slicing bezogenen Authentifizierung, Autorisierung und/oder Abrechnung, durchgeführt durch eine erste Netzfunktion (101), die einen Data-Network-Authentication-Authorization-Accounting-Server (DN-AAA-Server) implementiert, und umfassend:
- Empfangen (S301, S302) einer Anforderungsnachricht von einer zweiten Netzfunktion (102), die auf Network Slicing bezogene Informationen für eine Protokolldateneinheitssitzung (PDU-Sitzung) sowie eine Kennung (ID) der PDU-Sitzung umfasst;
wobei die Anforderungsnachricht eine Zugriffsanforderungsnachricht zur Authentifizierung ist, oder
wobei die Anforderungsnachricht eine Abrechnungsanforderungsnachricht ist, die angibt, dass die PDU-Sitzung begonnen hat.

2. Verfahren (300) nach Anspruch 1, wobei die auf Network Slicing bezogenen Informationen die Single Network Slice Selection Assistance Information (S-NSSAI) angeben, die der PDU-Sitzung zugeordnet sind; und optional, wobei die S-NSSAI durch eine 3GPP-Sitzungs-S-NSSAI oder ein anderes herstellerspezifisches Attribut (VSA), das S-NSSAI enthält, angegeben wird; und optional wobei die Sitzungs-S-NSSAI ferner Informationen enthalten, die mindestens einen der folgenden Parameter angeben: PDU-Sitzungs-ID, Slice/Service Type (SST) und Slice Differentiator des Network Slice.

3. Verfahren (300) nach einem der Ansprüche 1 bis 2, wobei die Anforderungsnachricht ferner Informationen zum Data Network Name (DNN) umfasst.

4. Verfahren (300) nach Anspruch 1, wobei die auf Network Slicing bezogenen Informationen ferner die PDU-Sitzungs-ID angeben; und optional wobei die PDU-Sitzungs-ID durch die 3GPP-Sitzungs-ID oder ein anderes herstellerspezifisches Attribut (VSA), das die PDU-Sitzungs-ID enthält, angegeben ist.

5. Verfahren (300) nach Anspruch 1, wobei die Zugriffsanforderungsnachricht eine Remote-Authentication-Dial-In-User-Service-(Radius-)Zugriffsanforderungsnachricht, eine Diameter-Authentication-Authorization-Request-(AAR-)Nachricht oder eine Diameter-Extensible-Authentication-Protocol-Request-(DER-)Nachricht ist.

6. Verfahren (300) nach Anspruch 1, wobei die Abrechnungsanforderungsnachricht eine Remote-Authentication-Dial-In-User-Service-(Radius-)Abrechnungsanforderungsnachricht oder eine Diameter-Abrechnungsanforderungsnachricht ist; und optional wobei die Abrechnungsanforderungsnachricht ferner Informationen umfasst, die den Beginn, eine Zwischenaktualisierung oder einen Stopp der Abrechnungssitzung angeben.

7. Verfahren (300) nach einem der Ansprüche 1 bis 6, wobei die zweite Netzfunktion eine Netzfunktion ist, die eine Session Management Function (SMF) oder Kombination aus SMF + P-Gateway-C (PGW-C) implementiert.

8. Verfahren (400), das von einer zweiten Netzfunktion (102) durchgeführt wird, die eine Session Management Function (SMF) oder Kombination aus SMF + P-Gateway-C (PGW-C) implementiert, umfassend:
- Senden (S401, S402) einer Anforderungsnachricht, die auf Network Slicing bezogene Informationen für eine Protokolldateneinheitssitzung (PDU-Sitzung) sowie eine Kennung (ID) der PDU-Sitzung umfasst, an eine erste Netzfunktion (101), die einen Data-Network-Authentication-Authorization-Accounting-Server (DN-AAA-Server) implementiert;
wobei die Anforderungsnachricht eine Zugriffsanforderungsnachricht zur Authentifizierung ist, oder
wobei die Anforderungsnachricht eine Abrechnungsanforderungsnachricht ist, die angibt, dass die PDU-Sitzung begonnen hat.

9. Verfahren (400) nach Anspruch 8, wobei die auf Network Slicing bezogenen Informationen die Single Network Slice Selection Assistance Information (S-NSSAI) angeben, die der PDU-Sitzung zugeordnet sind; und optional, wobei die S-NSSAI durch eine 3GPP-Sitzungs-S-NSSAI oder ein anderes herstellerspezifisches Attribut (VSA), das S-NSSAI enthält, angegeben wird; und optional wobei die Sitzungs-S-NSSAI ferner Informationen enthalten, die mindestens einen der folgenden Parameter angeben: PDU-Sitzungs-ID, Slice/Service Type (SST) und Slice Differentiator des Network Slice.

10. Verfahren (400) nach einem der Ansprüche 8 bis 9, wobei die Anforderungsnachricht ferner Informationen zum Data Network Name (DNN) umfasst.

11. Verfahren (400) nach Anspruch 8, wobei die auf Network Slicing bezogenen Informationen ferner die PDU-Sitzungs-ID angeben; und optional wobei die PDU-Sitzungs-ID durch die 3GPP-Sitzungs-ID oder ein anderes herstellerspezifisches Attribut (VSA), das die PDU-Sitzungs-ID enthält, angegeben ist.

12. Verfahren (400) nach Anspruch 8, wobei
{i} die Zugriffsanforderungsnachricht eine Remote-Authentication-Dial-In-User-Service-(Radius-)Zugriffsanforderungsnachricht, eine Diameter-Authentication-Authorization-Request-(AAR-)Nachricht oder eine Diameter-Extensible-Authentication-Protocol-Request-(DER-)Nachricht ist; wobei optional die Abrechnungsanforderungsnachricht ferner Informationen umfasst, die den Beginn, die Zwischenaktualisierung oder den Stopp der Abrechnungssitzung angeben; oder
{ii} die Abrechnungsanforderungsnachricht eine Remote-Authentication-Dial-In-User-Service-(Radius-)Abrechnungsanforderungsnachricht oder eine Diameter-Abrechnungsanforderungsnachricht ist; wobei optional die Abrechnungsanforderungsnachricht ferner Informationen umfasst, die den Beginn, eine Zwischenaktualisierung oder einen Stopp der Abrechnungssitzung angeben.

13. Erste Netzfunktion (101, 500), die einen Data-Network-Authentication-Authorization-Accounting-Server (DN-AAA-Server) implementiert, umfassend:
mindestens einen Prozessor (501); und
ein nichttransitorisches computerlesbares Medium (502), das an den mindestens einen Prozessor (501) gekoppelt ist, wobei auf dem nichttransitorischen computerlesbaren Medium (502) Anweisungen enthalten sind, die von dem mindestens einen Prozessor (501) ausführbar sind, wobei der mindestens eine Prozessor (501) dazu konfiguriert ist, das Verfahren nach einem der Ansprüche 1 bis 7 durchzuführen.

14. Zweite Netzfunktion (102, 500), die eine Session Management Function (SMF) oder Kombination aus SMF + P-Gateway-C (PGW-C) implementiert, umfassend:
mindestens einen Prozessor (501); und
ein nichttransitorisches computerlesbares Medium (502), das an den mindestens einen Prozessor (501) gekoppelt ist, wobei auf dem nichttransitorischen computerlesbaren Medium (502) Anweisungen enthalten sind, die von dem mindestens einen Prozessor (501) ausführbar sind, wobei der mindestens eine Prozessor (501) dazu konfiguriert ist, das Verfahren nach einem der Ansprüche 1 bis 7 durchzuführen.

15. Computerlesbares Medium (502, 602), umfassend computerlesbaren Code, der bei Ausführung auf einer Vorrichtung (101, 102, 500, 600) die Vorrichtung (101, 102, 500, 600) dazu veranlasst, das Verfahren nach einem der Ansprüche 1 bis 7 oder 8 bis 12 durchzuführen.

## Revendications

1. Procédé (300) d'authentification, d'autorisation et/ou de comptabilité relatif à une tranche de réseau, réalisé par une première fonction réseau (101) mettant en œuvre un serveur d'authentification, d'autorisation et de comptabilité de réseau de données (DN-AAA) et comprenant :
- la réception (S301, S302), en provenance d'une seconde fonction réseau (102), d'un message de demande comprenant des informations relatives à la tranche de réseau pour une session d'unité de données de protocole (PDU) et un identifiant (ID) de la session PDU,
dans lequel le message de demande est un message de demande d'accès pour l'authentification, ou
dans lequel le message de demande est un message de demande de comptabilité indiquant que la session PDU a démarré.

2. Procédé (300) selon la revendication 1, dans lequel les informations relatives à la tranche de réseau indiquent les informations d'assistance à la sélection de tranche de réseau unique (S-NSSAI) qui sont associées à la session PDU ; et éventuellement dans lequel les S-NSSAI sont indiquées par les S-NSSAI de session 3GPP ou un autre attribut spécifique au fournisseur (VSA) contenant les S-NSSAI ; et éventuellement dans lequel les S-NSSAI de session comprennent en outre des informations indiquant au moins l'un des paramètres suivants : l'ID de session PDU, le type de tranche/service (SST) et le différenciateur de tranche de la tranche de réseau.

3. Procédé (300) selon l'une quelconque des revendications 1 à 2, dans lequel le message de demande comprend en outre des informations de nom de réseau de données (DNN).

4. Procédé (300) selon la revendication 1, dans lequel les informations relatives à la tranche de réseau indiquent en outre l'ID de session PDU ; et éventuellement dans lequel l'ID de session PDU est indiqué par l'ID de session 3GPP ou un autre attribut spécifique au fournisseur (VSA) contenant l'ID de session PDU.

5. Procédé (300) selon la revendication 1, dans lequel le message de demande d'accès est un message de demande d'accès de service utilisateur d'authentification à distance (Radius), un message de demande d'autorisation d'authentification Diameter (AAR) ou un message de demande de protocole d'authentification extensible Diameter (DER).

6. Procédé (300) selon la revendication 1, dans lequel le message de demande de comptabilité est un message de demande de comptabilité de service utilisateur d'authentification à distance (Radius) ou un message de demande de comptabilité Diameter ; et éventuellement dans lequel le message de demande de comptabilité comprend en outre des informations indiquant le démarrage, la mise à jour intermédiaire ou l'arrêt de la session de comptabilité.

7. Procédé (300) selon l'une quelconque des revendications 1 à 6, dans lequel la seconde fonction réseau est une fonction réseau mettant en œuvre une fonction de gestion de session (SMF) ou une combinaison SMF + P-Gateway-C (PGW-C).

8. Procédé (400) réalisé par une seconde fonction réseau (102) mettant en œuvre une fonction de gestion de session (SMF) ou une combinaison SMF + P-Gateway-C (PGW-C), comprenant :
- la transmission (S401, S402), à une première fonction réseau (101) mettant en œuvre un serveur de comptabilité d'autorisation d'authentification de réseau de données (DN-AAA), un message de demande comprenant des informations relatives à la tranche de réseau pour une session d'unité de données de protocole (PDU) et un identifiant (ID) de la session PDU,
dans lequel le message de demande est un message de demande d'accès pour l'authentification, ou
dans lequel le message de demande est un message de demande de comptabilité indiquant que la session PDU a démarré.

9. Procédé (400) selon la revendication 8, dans lequel les informations relatives à la tranche de réseau indiquent les informations d'assistance à la sélection de tranche de réseau unique (S-NSSAI) qui sont associées à la session PDU ; et éventuellement dans lequel les S-NSSAI sont indiquées par les S-NSSAI de session 3GPP ou un autre attribut spécifique au fournisseur (VSA) contenant les S-NSSAI ; et éventuellement dans lequel les S-NSSAI de session comprennent en outre des informations indiquant au moins l'un des paramètres suivants : l'ID de session PDU, le type de tranche/service (SST) et le différenciateur de tranche de la tranche de réseau.

10. Procédé (400) selon l'une quelconque des revendications 8 à 9, dans lequel le message de demande comprend en outre des informations de nom de réseau de données (DNN).

11. Procédé (400) selon la revendication 8, dans lequel les informations relatives à la tranche de réseau indiquent en outre l'ID de session PDU ; et éventuellement dans lequel l'ID de session PDU est indiqué par l'ID de session 3GPP ou un autre attribut spécifique au fournisseur (VSA) contenant l'ID de session PDU.

12. Procédé (400) selon la revendication 8, dans lequel
{i} le message de demande d'accès est un message de demande d'accès de service utilisateur d'authentification à distance (Radius), un message de demande d'autorisation d'authentification Diameter (AAR) ou un message de demande de protocole d'authentification extensible Diameter (DER) ; dans lequel, éventuellement, le message de demande de comptabilité comprend en outre des informations indiquant le démarrage, la mise à jour intermédiaire ou l'arrêt de la session de comptabilité ; ou
{ii} le message de demande de comptabilité est un message de demande de comptabilité de service utilisateur d'authentification à distance (Radius) ou un message de demande de comptabilité Diameter ; dans lequel, éventuellement, le message de demande de comptabilité comprend en outre des informations indiquant le démarrage, la mise à jour intermédiaire ou l'arrêt de la session de comptabilité.

13. Première fonction réseau (101, 500) mettant en œuvre un serveur de comptabilité d'autorisation d'authentification de réseau de données (DN-AAA), comprenant :
au moins un processeur (501) ; et
un support lisible par ordinateur non transitoire (502) couplé à l'au moins un processeur (501), le support lisible par ordinateur non transitoire (502) contient des instructions exécutables par l'au moins un processeur (501), l'au moins un processeur (501) étant configuré pour réaliser le procédé selon l'une quelconque des revendications 1 à 7.

14. Seconde fonction réseau (102, 500) mettant en œuvre la fonction de gestion de session (SMF) ou une combinaison SMF + P-Gateway-C (PGW-C), comprenant :
au moins un processeur (501) ; et
un support lisible par ordinateur non transitoire (502) couplé à l'au moins un processeur (501), le support lisible par ordinateur non transitoire (502) contient des instructions exécutables par l'au moins un processeur (501), l'au moins un processeur (501) étant configuré pour réaliser le procédé selon l'une quelconque des revendications 8 à 12.

15. Support lisible par ordinateur (502, 602) comprenant un code lisible par ordinateur, qui, lorsqu'il est exécuté sur un appareil (101, 102, 500, 600), amène l'appareil (101, 102, 500, 600) à réaliser le procédé selon l'une quelconque des revendications 1 à 7 ou 8 à 12.
